# EUROPEAN PATENT APPLICATION

(11) **EP 1 855 222 A1**
(43) Date of publication of application: **14.11.2007**
(21) Application number: 06009424.0
(22) Date of filing: 08.05.2006
(51) Int. Cl.: G06F 21/00

(54) **Portable voiceprint-lock remote transmitting system and operation method thereof**

(71) Applicant: Top Digital Co., Ltd., Hsichih City Taipei Hsien Taiwan (CN)
(72) Inventor: Yu, Kun-Lang, An-Le Dist Keelung (TW); Ouyang, Yen-Chieh, North Dist. Taichung (TW)
(74) Representative: LOUIS, PÖHLAU, LOHRENTZ

(57) **Abstract**

A portable voiceprint-lock remote transmitting system includes a network voiceprint database and network communication devices connecting with the network voiceprint database on a network. The network voiceprint database includes a public-access voiceprint directory and a plurality of public-access voiceprint keys. The network communication device can download the public-access voiceprint key from the network voiceprint database, and the selected public-access voiceprint key can be used to encrypt electronic files to form a voiceprint lock. A receiver can decrypt the encrypted electronic files in a verification procedure. An operation method comprises the steps of: employing a network voiceprint database to provide public-access voiceprint keys; connecting a network communication device with the network voiceprint database on a network so as to obtain the public-access voiceprint key; employing the public-access voiceprint key to encrypt electronic files to form a voiceprint lock; and transmitting or delivering the encrypted electronic file to a receiver.

## Description

### BACKGROUND OF THE INVENTION

### 1. Field of the Invention

The present invention relates to a portable voiceprint-lock remote transmitting system and an operation method thereof. Particularly, the present invention relates to the portable voiceprint-lock remote transmitting system employing a public-access voiceprint key to encrypt an electronic file (e.g. computer file) or a memory device to form a designated voiceprint lock for being safe from information leak. More particularly, the present invention relates to the portable voiceprint-lock remote transmitting system for transmitting electronic files or memory devices with the designated voiceprint lock to a designated receiver by way of networks, Internet, other transmissions, post or other deliveries.

### 2. Description of the Related Art

Currently, biological features (i.e. unique physical traits) have been gradually and widely used in personal verification. A bunch of technologies using biological features for personal verification include face recognition, fingerprint recognition, palm print recognition, voiceprint recognition, iris recognition and DNA fingerprint recognition etc.

Many approaches to security of personal electronic data have long been developed. For instance, a secret code or a password is traditionally used to secure personal electronic data, but it cannot effectively protect personal electronic data because of leakage of secret code or on-line invasion by hackers. The secret code or password, after all, is difficult to remember and easy to steal. Hence, there is a need for seeking out other effective measures for security of the personal electronic data. In consideration of practical use and cost for biometrics, it is found that voiceprint recognition is suitably going to the main stream of personal verification.

In order to safely accomplish data transmission, data store or online transaction processing, there is a need for providing a verification measure that is appropriate for individuals. For instance, a key is widely employed to encrypt and decrypt electronic files or memory devices in implementing data transmission. Typically, technologies for such a key are divided into three types: (1) a private key or secret key, which employs a symmetry encryption method, is established under DES (Data Encryption Standard) and IDEA (International Data Encryption Algorithm); (2) a public key, which employs an asymmetry encryption method, is developed by RSA (Revest, Shamir and Adleman); and (3) a combining private and public key is constructed from a combination of the private key and the public key.

U.S. Patent Application Publication No. US 2003/0101349, entitled "METHOD OF USING CRYPTOGRAPHY WITH BIOMETRIC VERIFICATION ON SECURITY AUTHENTICATION," discloses a method employing unique biometric feature to provide a combination mechanism of personal information and biometric verification. The method can preserve a user's private key so that the user can communicate his confidential information, business transaction or economic activities with high security standard by using his private key. User's private keys K2 and user's biometric features are stored in KDC (Key Distribution Center). Users can transmit an encrypted public key K1 consisting of his PIN (personal information, e.g. password) and biometric feature to KDC via Internet. Subsequently, KDC can decrypt the public key K1 to obtain the PIN and biometric feature, and then a verification process is implemented. The user cannot receive the private key K2 if the verification process is rejected or failed. Conversely, the user can receive the private key K2 if the verification process is passed. Thereafter, KDC decrypts the private key K2 and transmits the encrypted private key K2 to a user's host via Internet. The user can decrypt the encrypted private key K2 by using the public key K1, and obtain the decrypted private key K2 in the event. The private key K2 can be selectively stored in RISC CPU (Reduced Instruction Set Computer), CISC CPU (Complex Instruction Set Computer), DSP (Digital Signal Processor), FPGA (Field Programmable Gate Array), CPLD (Complex Programmable Logic Device), ASIC (Application Specific Integrated Circuit), Microprocessor, Micro Controller, or other calculating functional chips, wherein the calculating functional chips include system-on-chip (SOC), multiple-function-system-on-chip and system-on-multiple-chips. Typically, the biometric features include fingerprint, voiceprint, face, retina, iris, palm print, signature or other human biometric features which is established under the standard by International Biometric Industry Association (IBIA).

Advantageously, the above-mentioned method of US 2003/0101349 is successful in omitting the user to keep or bear in mind his personal private key K2 that can be stored and easy in use at any time. The fact that the verification process suitable for safe online transaction processing, ordinary business transaction and economic activities has since been accomplished at the same time is a primary consideration, too.

However, the above-mentioned method of US 2003/0101349 must transmit PIN and information of personal biological features of the user to KDC by way of Internet. Thereafter, KDC may implement a verification process by comparing them with stored PIN (personal information) and personal biological features. After passing the verification process, the private key K2 is encrypted and returned to the host of the user. Accordingly, the user can decrypt the encrypted private key K2 by the public key K1 so as to obtain his personal private key K2 without a need of keeping it all the time. As such, the user can receive the decrypted private key K2 for an online transaction processing on the Internet for example. Although the above-mentioned method of US 2003/0101349 can be successful in safe online transaction processing, it can have various disadvantages. For example, it can achieve a safe data transmission for the PIN and information of the personal biological features on the Internet, but the process is sophisticated for users.

Another problem with the above-mentioned method of US 2003/0101349 is a design limitation due to the fact that the KDC can only a provide user's own private key and the user cannot obtain a private key or any biological feature of another person for online transaction processing. Hence, there is a need for improving the above-mentioned method of US 2003/0101349.

As is described in greater detail below, the present invention intends to provide a portable voiceprint-lock remote transmitting system and an operation method thereof, wherein a public-access voiceprint key is downloaded to encrypt electronic files to form a designated voiceprint lock and to transmit or deliver it to a designated receiver by way of networks, Internet, other transmission means, post or other deliveries. Accordingly, the system can provide the public-access voiceprint key for encrypting the electronic files such that a verification procedure for the designated receiver in decrypting the electronic files is accomplished in such a way as to mitigate and overcome the above problem.

### SUMMARY OF THE INVENTION

The primary objective of this invention is to provide a portable voiceprint-lock remote transmitting system and an operation method thereof, wherein a network communication device is employed to directly select a public-access voiceprint key on a network, and thereby to encrypt electronic files to form a designated voiceprint lock. Thereafter, a designated receiver can decrypt the encrypted electronic files which are received by way of networks, Internet, other transmission means, post or other deliveries. Accordingly, users can directly select and download the public-access voiceprint keys of the designated receivers on the network with ease.

The secondary objective of this invention is to provide the portable voiceprint-lock remote transmitting system and the operation method thereof, wherein a public-access voiceprint key is registered and provided to encrypt electronic files to form a designated voiceprint lock. The encrypted electronic files are transmitted by way of networks, Internet or other transmission means, or delivered by post or other deliveries, and a designated receiver can decrypt the encrypted electronic files in a verification procedure. Accordingly, the system can simplify the encrypting/decryption operation by providing the registered public-access voiceprint key.

The portable voiceprint-lock remote transmitting system in accordance with an aspect of the present invention includes a network voiceprint database and at least one network communication device. The network communication device connects with the network voiceprint database on a network for communication. The network voiceprint database includes a public-access voiceprint directory and a plurality of public-access voiceprint keys arranged therein. The network communication device can be used to select and download the public-access voiceprint key from the network voiceprint database on the network, and the selected public-access voiceprint key can be used to encrypt electronic files to form a designated voiceprint lock. The encrypted electronic files can be transmitted by way of networks, Internet or other transmission means, or delivered by post or other deliveries, and a designated receiver can decrypt the encrypted electronic files in a verification procedure.

The operation method of the portable voiceprint-lock remote transmitting system in accordance with another aspect of the present invention comprises the steps of: employing a network voiceprint database to provide a plurality of public-access voiceprint keys; connecting a network communication device with the network voiceprint database on a network so as to obtain the public-access voiceprint key therefrom; employing the public-access voiceprint key to encrypt an electronic file or a memory device to form a designated voiceprint lock; and transmitting or delivering the encrypted electronic file or memory device to a designated receiver by way of networks, Internet, other transmission means, post or other deliveries.

Further scope of the applicability of the present invention will become apparent from the detailed description given hereinafter. However, it should be understood that the detailed description and specific examples, while indicating preferred embodiments of the invention, are given by way of illustration only, since various will become apparent to those skilled in the art from this detailed description.

### BRIEF DESCRIPTION OF THE DRAWINGS

The present invention will become more fully understood from the detailed description given hereinbelow and the accompanying drawings which are given by way of illustration only, and thus are not limitative of the present invention, and wherein:
FIG. 1 is a block diagram illustrating a portable voiceprint-lock remote transmitting system in accordance with a preferred embodiment of the present invention;
FIG. 1A is a flow chart illustrating an operation method of the portable voiceprint-lock remote transmitting system in accordance with a preferred embodiment of the present invention;
FIG. 2 is a schematic diagram illustrating public-access voiceprint directories of the portable voiceprint-lock remote transmitting system in accordance with the preferred embodiment of the present invention;
FIG. 3 is a block diagram illustrating the portable voiceprint-lock remote transmitting system in accordance with the preferred embodiment of the present invention in encrypting operation;
FIG. 4 is a block diagram illustrating the portable voiceprint-lock remote transmitting system in accordance with the preferred embodiment of the present invention in decrypting operation; and
Fig. 5 is a block diagram illustrating the portable voiceprint-lock remote transmitting system in accordance with the preferred embodiment of the present invention in encrypting, network transmitting and decrypting operations.

### DETAILED DESCRIPTION OF THE INVENTION

A portable voiceprint-lock remote transmitting system and an operation method thereof in accordance with the present invention can be applied to encrypt electronic files or memory devices such as Compact Discs (CD), Digital Video Disks (DVD), Hard Disks (HD), Floppy Disks, Magneto-Optical Disks (MO Disks), Drive Pens, or other portable electric devices which can be encrypted or electronic files of which can be encrypted. The encrypted electronic files or memory devices can be transmitted to a designated receiver via a network or other means. The network transmission includes MSN (Microsoft Network), Yahoo Message, E-mail, and File Transfer Protocol (FTP) etc.

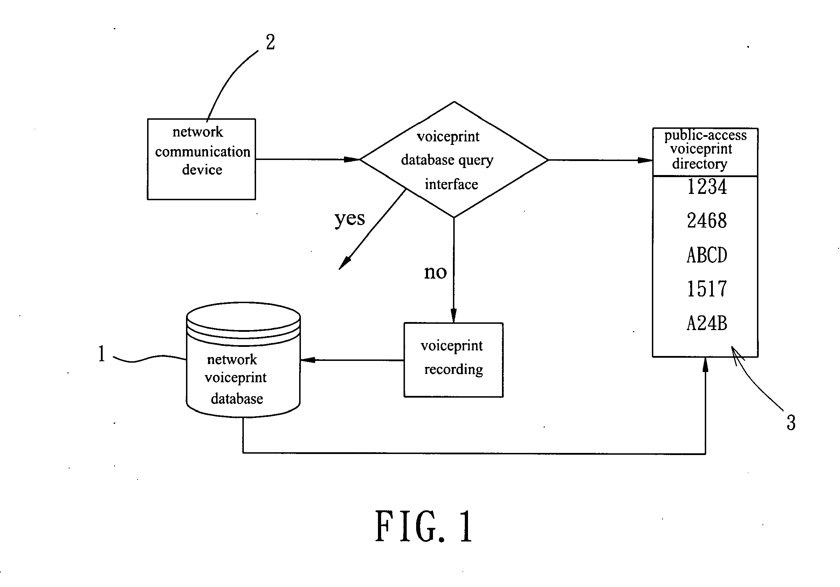

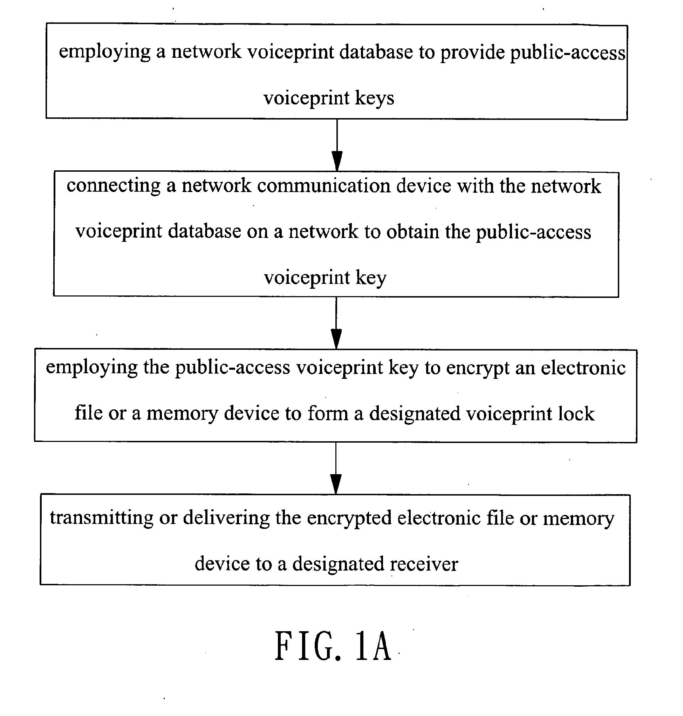

Referring initially to FIG. 1, a block diagram of a portable voiceprint-lock remote transmitting system in accordance with a preferred embodiment of the present invention is illustrated. The portable voiceprint-lock remote transmitting system includes a network voiceprint database 1 and at least one network communication device 2. In this preferred embodiment, the network voiceprint database 1 is distributed on a network for communication. The network communication device 2 is preferably selected from a network access device, and used to connect to the network so as to access the network voiceprint database 1 for retrieving a voiceprint key.

Turning now to FIG. 1A, a flow chart of an operation method of the portable voiceprint-lock remote transmitting system in accordance with a preferred embodiment of the present invention is illustrated. By referring FIGS. 1 and 1A, a first step of the method in accordance with the present invention is employing the network voiceprint database 1 to provide public-access voiceprint keys. Subsequent to the first step, a second step of the method is employing the network communication device 2 to access the network so as to access the network voiceprint database 1.

Still referring FIGS. 1 and 1A, in the first and second steps, the network voiceprint database 1 can be connected and communicated with the network communication device 2. In a preferred embodiment, the network voiceprint database 1 includes at least one voiceprint database query interface, at least one public-access voiceprint directory and a plurality of public-access voiceprint keys 3 which can be downloaded by the network communication device 2. Preferably, the network communication device 2 is selected from a group consisting of personal computers, laptops (notebook computers), Personal Digital Assistances (PDA), mobile phones, iPod and MP3 (MPEG Audio Layer-3), or other equivalent electronic devices etc.

Still referring to FIGS. 1 and 1A, when a user employs the network communication device 2 to enter the voiceprint database query interface of the network voiceprint database 1 in searching voiceprint data, the voiceprint database query interface can display whether a designated public-access voiceprint key has been registered or not. The voiceprint database query interface may request registration of a voiceprint if the designated public-access voiceprint key has not registered yet. Conversely, the voiceprint database query interface may immediately permit the user to select the public-access voiceprint keys 3 if the designated public-access voiceprint keys have been already registered.

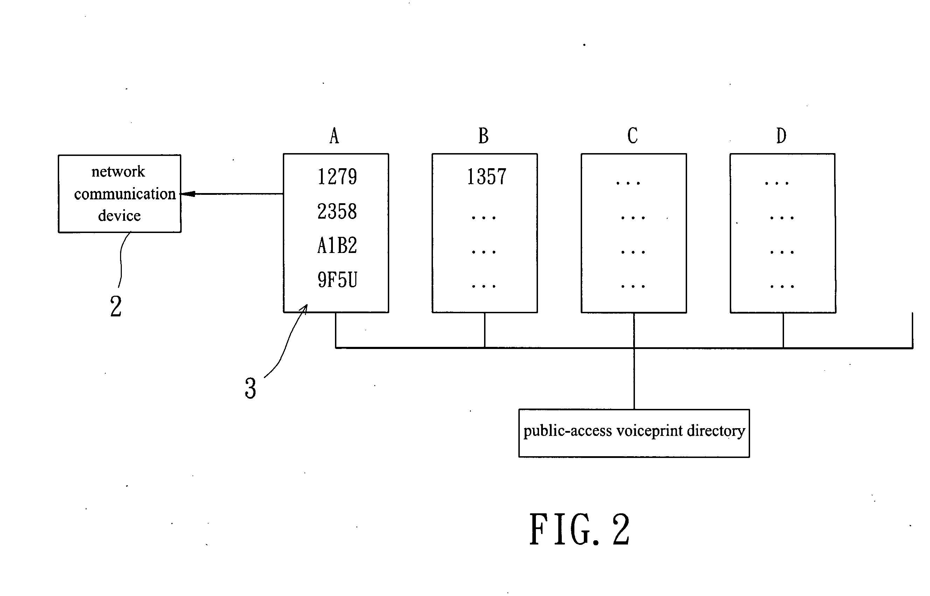

Turning now to FIG. 2, a schematic diagram of public-access voiceprint directories of the portable voiceprint-lock remote transmitting system in accordance with the preferred embodiment of the present invention is illustrated. By referring to FIGS. 1, 1A and 2, in the second step, the user can select the designated public-access voiceprint key 3 from the public-access voiceprint directory of the network voiceprint database 1 through the network communication device 2. The public-access voiceprint directory of the network voiceprint database 1 provides a plurality of columns of the public-access voiceprint keys 3, including columns A, B, C, D... for example.

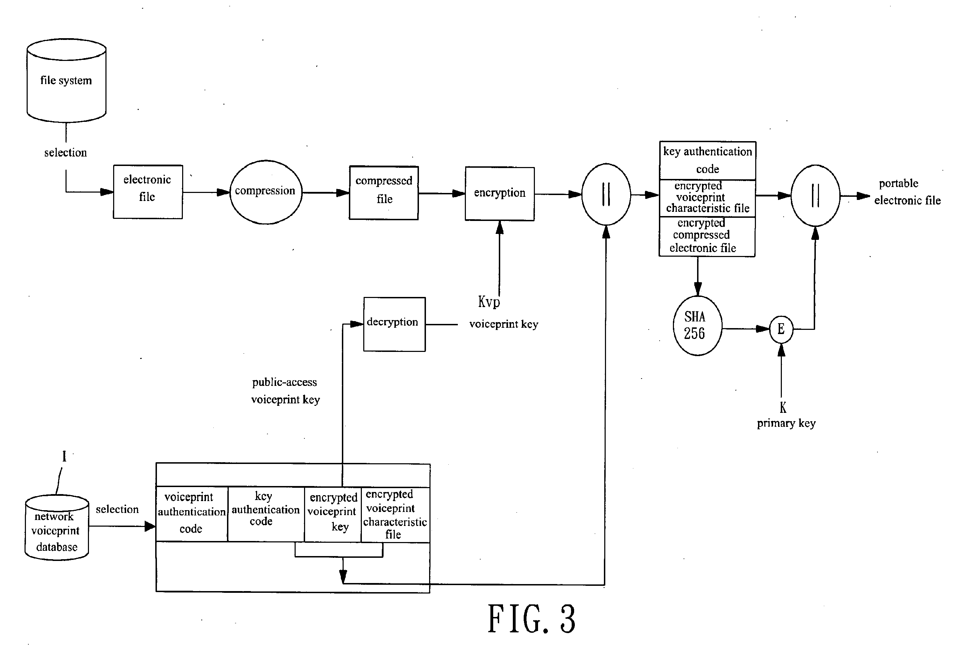

Turning now to FIG. 3, a block diagram of the portable voiceprint-lock remote transmitting system in accordance with the preferred embodiment of the present invention in encrypting operation is illustrated. In third step, the user can employ the public-access voiceprint key 3 to encrypt an electronic file or a memory device (not shown) to form a designated voiceprint lock such that the encrypted electronic file or memory device is achieved, by referring to FIGS. 1, 1A and 3. With reference to the lower portion in FIG. 3 in particular, the network communication device 2 that receives voiceprint authentication codes, key authentication codes, encrypted voiceprint keys and encrypted voiceprint characteristic files of a designated person from the network voiceprint database 1 can provide the public-access voiceprint key 3. Subsequent to this, the user can decrypt the encrypted voiceprint key to generate a designated voiceprint key (identified as "Kᵥₚ") of the designated person. With reference to the upper portion in FIG. 3, the user can select the electronic file from a file system, and execute a compression computer program to convert the electronic file into a compressed electronic file. Next, the user can employ the designated voiceprint key Kᵥₚ to encrypt the compressed electronic file so that an encrypted compressed electronic file is generated. The key authentication codes and the encrypted voiceprint characteristic files of the designated person are attached to the encrypted compressed electronic file. Once attached, a series of the encrypted compressed electronic file, key authentication codes and encrypted voiceprint characteristic files can be converted into message authentication codes via a message authentication-code generating mechanism. In a preferred embodiment, the message authentication-code generating mechanism is selected from SHA (Secure Hash Algorithm), and a primary key (identified as "K") is further used to encrypt the message authentication codes such that the message authentication codes are generated. The encrypted compressed electronic file, key authentication codes, encrypted voiceprint characteristic files and message authentication codes are combined to form a portable electronic file. In encrypting operation, the designated voiceprint key Kᵥₚ of the designated person and the primary key K are successful in use for generating the encrypted electronic file. With reference to FIG. 1A, in fourth step, the portable electronic file can be transmitted to a designated receiver on a network or by other transmission means (e.g. mobile phone message), or can be stored in other portable memory device (e.g. CD) to deliver to the designated receiver.

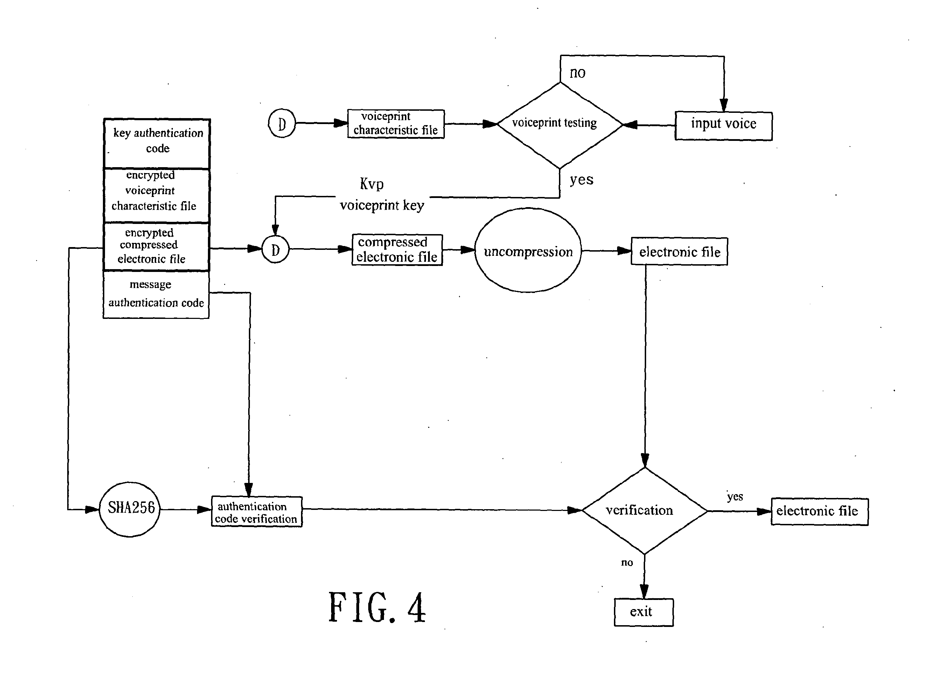

Turning now to FIG. 4, a block diagram of the portable voiceprint-lock remote transmitting system in accordance with the preferred embodiment of the present invention in decrypting operation is illustrated. In the fourth step, the user can select one of Internet, other transmission means or other portable memory device to transmit or deliver the portable electronic file, by referring to FIGS. 1A and 4. When the designated receiver received the portable electronic file, the decrypting operation is necessary for the designated receiver. In the first instance the encrypted compressed electronic file is collated by the message authentication codes in authentication code verification, with reference to the lower portion in FIG. 4. The results of the authentication code verification can be further used to verify decrypted information of the encrypted compressed electronic file.

Referring now to the upper portion in FIG. 4, in decrypting operation, the encrypted voiceprint characteristic file and the encrypted compressed electronic file are successively decrypted so that the decrypted voiceprint characteristic file can be obtained at first. Accordingly, the designated receiver can give a voice input for voiceprint verification with the decrypted voiceprint characteristic file. In a preferred embodiment, the designated receiver can select a voiceprint verification system for the voiceprint verification. The voiceprint verification system includes a testing system for a voiceprint testing process. In voiceprint testing operation, the input voice can pass the voiceprint testing process and should be regarded as a correct voiceprint if errors of the input voice are lower than a predetermined threshold. Once passed, the designated voiceprint key Kᵥₚ is given to decrypt the encrypted compressed electronic file to receive the decrypted compressed electronic file. This results in unlocking the designated voiceprint lock. But, conversely, the input voice cannot pass the voiceprint testing process and should be regarded as an incorrect voiceprint if errors of the input voice are higher than a predetermined threshold. Then, the system in accordance with the present invention requests another input voice of the designated receiver. The technology relating to the voiceprint verification system is disclosed in applicant's own Taiwanese Patent Application No. 94119966 and its corresponding U.S. patent application Ser. No. 11/204,247, the entire disclosure of which is incorporated herein by reference.

Still referring to FIG. 4, the decrypted compressed electronic file can be uncompressed to obtain the uncompressed electronic file as well as the original electronic file. Finally, the uncompressed electronic file is collated by the message authentication codes in verification. The electronic file can be displayed on a display terminal of the designated receiver if the electronic file is consistent with the message authentication codes. But, conversely, the electronic file cannot be displayed and the decrypting operation is terminated if the electronic file is inconsistent with the message authentication codes.

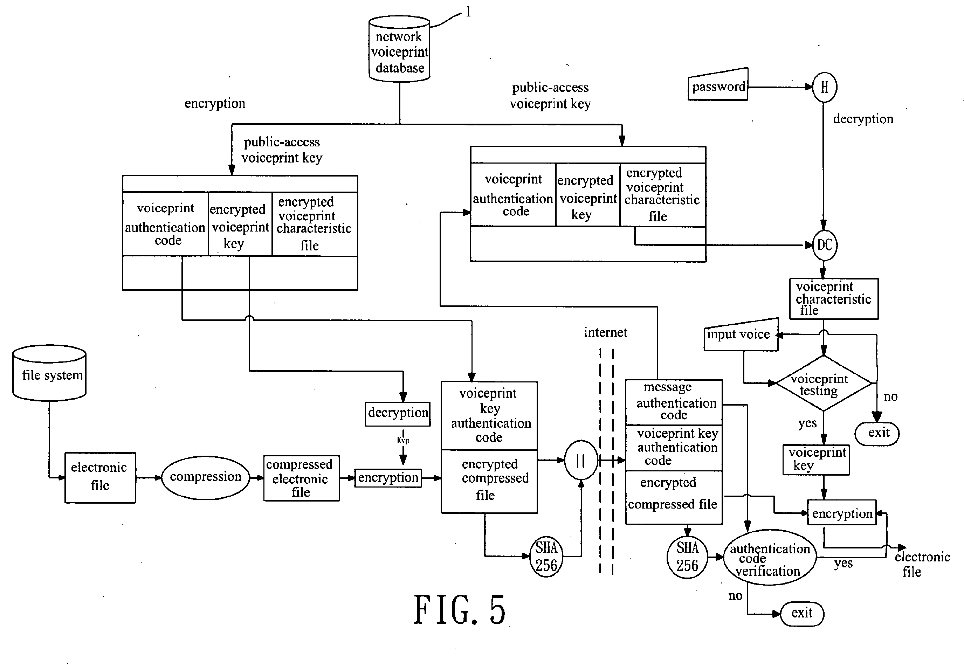

Turning now to FIG. 5, a block diagram of the portable voiceprint-lock remote transmitting system in accordance with the preferred embodiment of the present invention in encrypting, network transmitting and decrypting operations. In fourth step, the user can transmit or deliver the encrypted electronic file or memory device to a designated receiver by way of networks, Internet, other transmission means, post or other deliveries. In this case, the encrypting and decrypting operations of the system applied to Internet is exemplified with reference to FIG. 5. In encrypting operation, the procedure disclosed in the left side in FIG. 5 is corresponding to that in FIG. 3, and thus the detailed description thereof is omitted. In decrypting operation, a password is input to decrypt the encrypted voiceprint characteristic file, and then the input voice is input to process voiceprint verification. Similarly, the rest procedure disclosed in the right side in FIG. 5 is corresponding to that in FIG. 4, and thus the detailed description thereof is also omitted.

As has been discussed above, the method for accessing the personal private key of US 2003/0101349 is sophisticated. Conversely, the system of the present invention employs the public-access voiceprint key 3 used to encrypt the electronic file or memory device to form a designated voiceprint lock. The encrypted electronic file can be safely transmitted by way of networks, Internet or other transmission means, or delivered by post or other deliveries to a designated receiver. It will be understood that the user can make an active selection of the public-access voiceprint key from the system of the present invention.

Although the invention has been described in detail with reference to its presently preferred embodiment, it will be understood by one of ordinary skill in the art that various modifications can be made without departing from the spirit and the scope of the invention, as set forth in the appended claims.

## Claims

1. A portable voiceprint-lock remote transmitting system, comprising:
a network voiceprint database including a plurality of public-access voiceprint key; and
at least one network communication device connecting and communicating with the network voiceprint database on a network, the network communication device downloading the designated public-access voiceprint key from the network voiceprint database;
wherein a user can employ the designated public-access voiceprint key downloaded from the network communication device to encrypt at least one electronic file or at least one memory device which can be transmitted or delivered to a designated receiver.

2. The portable voiceprint-lock remote transmitting system as defined in claim 1, wherein the network voiceprint database further includes at least one public-access voiceprint directory in which the network communication device selects the public-access voiceprint key.

3. The portable voiceprint-lock remote transmitting system as defined in claim 1, wherein the network voiceprint database further includes at least one voiceprint database query interface.

4. The portable voiceprint-lock remote transmitting system as defined in claim 1, wherein the network communication device can encrypt the electronic file or memory device, and the user can transmit the encrypted electronic file or memory device to the designated receiver on the network.

5. The portable voiceprint-lock remote transmitting system as defined in claim 1, wherein the network communication device can encrypt the electronic file or memory device, and the user can deliver the encrypted electronic file or memory device to the designated receiver.

6. The portable voiceprint-lock remote transmitting system as defined in claim 1, wherein the user can store the encrypted electronic file on a selected memory device, and can deliver the selected memory device to the designated receiver.

7. The portable voiceprint-lock remote transmitting system as defined in claim 1, wherein the network communication device is selected from a group consisting of personal computers, laptops, Personal Digital Assistances, mobile phones, iPod, MP3 and other equivalent electronic devices.

8. The portable voiceprint-lock remote transmitting system as defined in claim 1, wherein the memory device is selected from a group consisting of Compact Discs, Digital Video Disks, Hard Disks, Floppy Disks, Magneto-Optical Disks, Drive Pens, or other portable electric devices.

9. An operation method for a portable voiceprint-lock remote transmitting system, comprising:
employing a network voiceprint database to provide a plurality of public-access voiceprint keys;
connecting a network communication device with the network voiceprint database on a network so as to obtain the designated public-access voiceprint key therefrom;
employing the public-access voiceprint key to encrypt an electronic file or a memory device to obtain the encrypted electronic file or the encrypted memory device; and
transmitting or delivering the encrypted electronic file or the encrypted memory device to a designated receiver.

10. The operation method for the portable voiceprint-lock remote transmitting system as defined in claim 9, wherein the network voiceprint database further includes at least one public-access voiceprint directory in which the network communication device selects the public-access voiceprint key.

11. The operation method for the portable voiceprint-lock remote transmitting system as defined in claim 9, wherein the network voiceprint database further includes at least one voiceprint database query interface.

12. The operation method for the portable voiceprint-lock remote transmitting system as defined in claim 9, wherein the network communication device can encrypt the electronic file or memory device, and a user can transmit the encrypted electronic file or memory device to the designated receiver on the network.

13. The operation method for the portable voiceprint-lock remote transmitting system as defined in claim 9, wherein the network communication device can encrypt the electronic file or memory device, and a user can deliver the encrypted electronic file or memory device to the designated receiver.

14. The operation method for the portable voiceprint-lock remote transmitting system as defined in claim 9, wherein a user can store the encrypted electronic file on a selected memory device, and can deliver the selected memory device to the designated receiver.

15. The operation method for the portable voiceprint-lock remote transmitting system as defined in claim 9, wherein the network communication device is selected from a group consisting of personal computers, laptops, Personal Digital Assistances, mobile phones, iPod, MP3 and other equivalent electronic devices.

16. The operation method for the portable voiceprint-lock remote transmitting system as defined in claim 9, wherein the memory device is selected from a group consisting of Compact Discs, Digital Video Disks, Hard Disks, Floppy Disks, Magneto-Optical Disks, Drive Pens, or other portable electric devices.
